# EUROPÄISCHE PATENTSCHRIFT

(11) **EP 0 582 893 B1**
(45) Veröffentlichungstag und Bekanntmachung des Hinweises auf die Patenterteilung: **06.05.1998**
(21) Anmeldenummer: 93112044.8
(22) Anmeldetag: 28.07.1993
(51) Int. Cl.: C09B 67/22, D06P 3/66, C09B 67/24

(54) **Reaktivfarbstoffmischung**
Reactive dye mixture
Mélange de colorants réactifs

(30) Priorität: 10.08.1992 DE 4226365; 07.09.1992 DE 4229836
(43) Veröffentlichungstag der Anmeldung: 16.02.1994
(73) Patentinhaber: BAYER AG, 51368 Leverkusen (DE)
(72) Erfinder: Schwarz, Max, Dr., D-51379 Leverkusen (DE); Grütze, Joachim, Dr., D-51519 Odenthal (DE); Hildebrand, Dietrich, Dr., D-51519 Odenthal (DE); Wolff, Joachim, Dr., D-51519 Odenthal (DE); Stöhr, Frank-Michael, Dr., D-51519 Odenthal (DE)

(56) Entgegenhaltungen:
- EP-A- 0 545 207
- DE-C- 4 142 766

## Beschreibung

Die Erfindung betrifft Mischungen von Reaktivfarbstoffen, die beim Färben von Cellulose oder Celluloseregeneratfasern ein gegenüber den Einzelkomponenten verbessertes Kombinationsverhalten besitzen.

Reaktivfarbstoffe werden in Form ihrer Einzelkomponenten oder in Form von Mischungen verschiedener Farbstoffe zum Färben von Cellulosefasern verwendet. Bei den Mischungen sollen die Reaktivitäten der Einzelkomponenten der Mischung möglichst gleich oder zumindest ähnlich sein, um die Kombinierbarkeit der Farbstoffe während des Färbevorgangs zu gewährleisten und somit ein "ruhiges", egales Warenbild zu erreichen. Besitzen Reaktivfarbstoffe unterschiedliche Reaktivitäten, so werden sie als voneinander verschiedenen Farbstoffsortimenten zugehörig angesehen, die nach unterschiedlichen Alkali- und Temperaturbedingungen angewandt werden müssen. Eine unterschiedliche Reaktivität bedingt entsprechend ein unterschiedliches Aufziehverhalten und damit nicht tongleiches Aufziehen von Farbstoffkombinationen während der Fixierung.

Reaktivfarbstoffe zum Färben von Cellulosefasern dienen insbesondere zum Färben in farbstarken Modetönen, Hierbei ist von besonderem Schwierigkeitsgrad die Erstellung von Färbungen hoher Egalität. Die Erstellung egaler Färbungen auf Basis eines einheitlichen Reaktivfarbstoffmoleküls ist mittels der heute im Markt befindlichen Farbstoffe mit erheblichen technischen Problemen belastet. Bekannte Farbstoffe aus dem Bereich der Monofluortriazine beziehungsweise Fluorpyrimidine, welche einen Mangel an Löslichkeit in Gegenwart des für die Reaktionsausbeute erforderlichen Elektrolytzusatzes besitzen und dazu ein hohes Reaktivitätsniveau gegenüber der Baumwolle aufweisen, neigen zu einem unegalen Aufziehen und Fixieren, besonders bei Anwendung in kurzen Flottenverhältnissen, so daß ihre diesbezügliche Anwendung eingeschränkt ist.

Farbstofftrichromien aus dem Bereich der Vinylsulfonyltriazine zeigen zwar bereits eine gute Kombinierbarkeit, jedoch nicht das Egalisiervermögen, welches ein vollkommenes tongleiches Aufziehverhalten erfordert.

Bekannt sind zwar Reaktivfarbmischungen, die Färbungen von guter Flächenegalität ergeben, aus Reaktivfarbstoffen, die jeweils einem Reaktivtyp entsprechen, d.h. entweder als Vinylsulfonyltriazine oder als Monofluortriazine beziehungsweise Monofluorpyrimidine bezeichnet werden können, diese zeigen jedoch immer noch den - Nachteil bei der Anwendung in einer Trichromie, daß der Gelb- oder Blau-oder Rotanteil vorzieht, wodurch das Färbegut während des Färbevorganges eine sich verändernde Nuance durchläuft. Dadurch ist eine Einschränkung ihrer Anwendbarkeit bei sich schwerer verlegenden Warenqualitäten und Faltenbildung in der Färbemaschine gegeben. Da der Temperaturbereich von 60°C für die Erhaltung der Warenqualität der Baumwolle von besonderem Interesse ist, kann eine derartige Mischung, die vom Standpunkt der mechanischen Verlegung der Baumwolle bei 80°C gefärbt werden müßte, nicht für die Färbung von Artikeln eingesetzt werden, die vorteilhaft bei 60°C gefärbt werden.

Der Temperaturbereich von 60°C besitzt für die Färbereien darüber hinaus den weiteren Vorteil, daß die Färbung mit einer gegenüber der 80°C-Methode deutlich verringerten Elektrolytmenge durchgeführt werden kann, wodurch eine erhebliche Verbesserung der Anfangsegalität beim primären Aufziehen der Farbstoffe während der Salzzugabe gegeben ist.

Beim Färben mit den heute praxisüblichen Reaktivfarbstoffkombinationen auf Basis gleicher oder ähnlicher Reaktivgruppen ist somit während des Fixierens eine starke Abhängigkeit der Nuance der Färbung in Abhängigkeit von dem individuellen Kombinationsverhalten der einzelnen Chromophore gegeben.

Es sind zwar bereits Mischungen von Reaktivfarbstoffen bekannt, die aber noch nicht alle Bedürfnisse befriedigen. Der Erfindung liegt die Aufgabe zugrunde, Reaktivfarbstoffmischungen zur Erstellung tongleich aufziehender Trichromien bereitzustellen, die bei guter Fixierausbeute einen gleichmäßigen Fixierkurvenverlauf zeigen, der denjenigen der Einzelfarbstoffe überlegen ist, in dem auch bei unterschiedlichen Salz, Alkali- und Temperaturbedingungen und bei allen Farbtiefen einer Kombination ein tongleicher Farbaufbau erfolgt.

Die Farbstoffmischung sollte eine hohe Löslichkeit und Elektrolytunempfindlichkeit aufweisen und bei variablen Temperatur-, Alkali- und Flottenbedingungen ein im zeitlichen Verlauf nuancenkonstantes flächenegales und reproduzierbares Färbeverhalten zeigen.

Die vorliegende Erfindung betrifft eine Farbstoffmischung aus wenigstens zwei Reaktivfarbstoffen gleichen Farbtons, dadurch gekennzeichnet, daß wenigstens ein Vinylsulfonyltriazinfarbstoff 1 der Formel 1.1 bis 1.5. 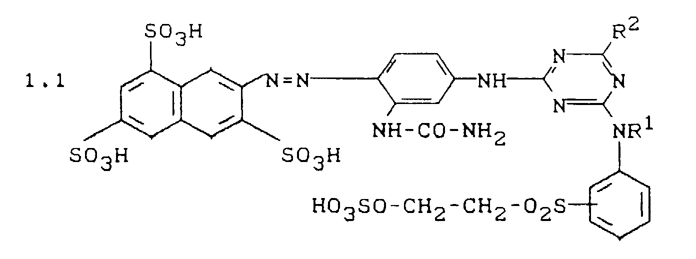 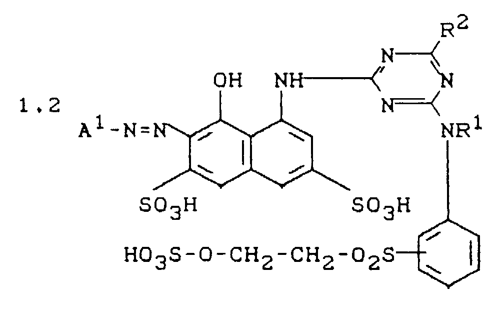 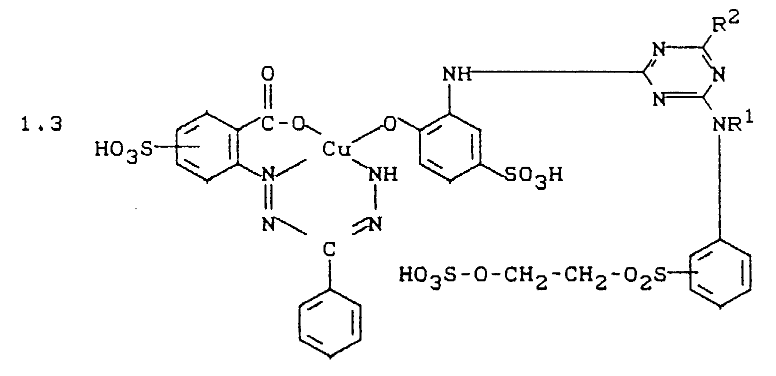 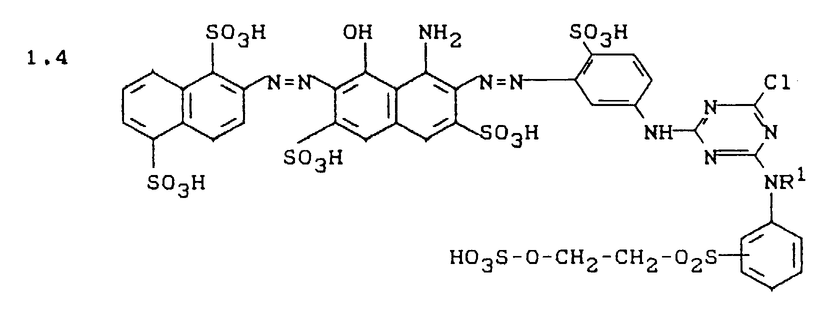 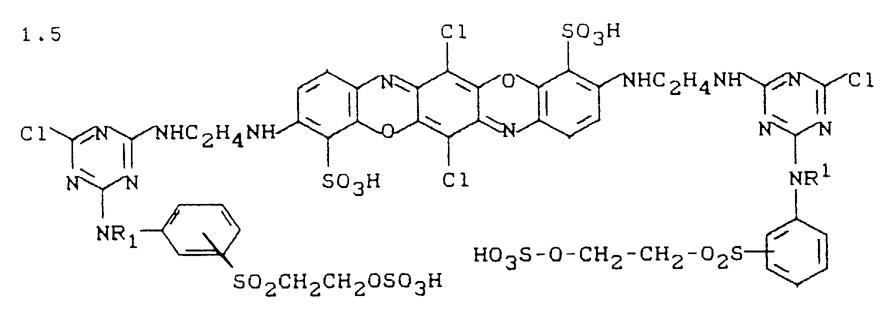 und wenigstens ein Monofluortriazinfarbstoff 2 oder Fluorchlorpyrimidinfarbstoff 3 der Formeln 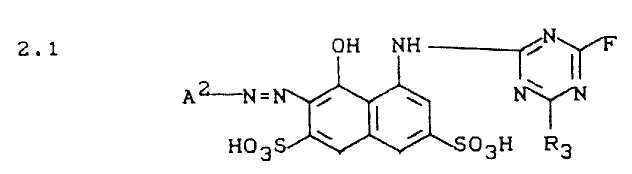 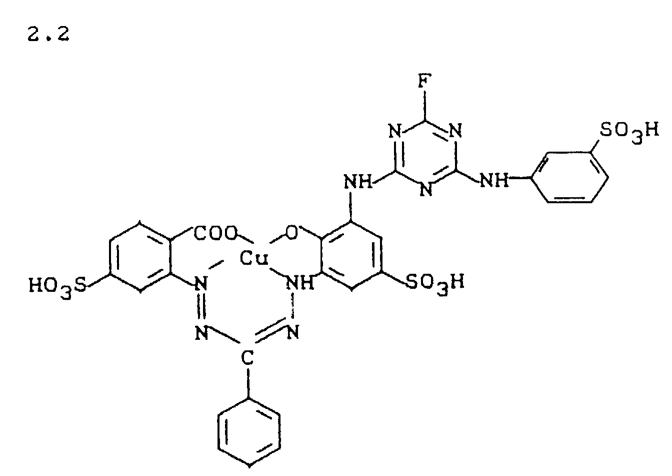 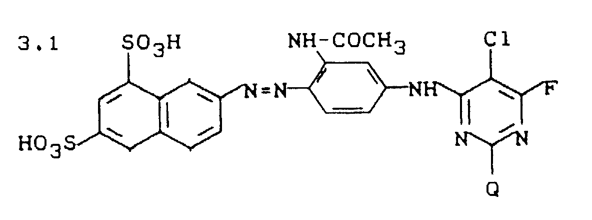 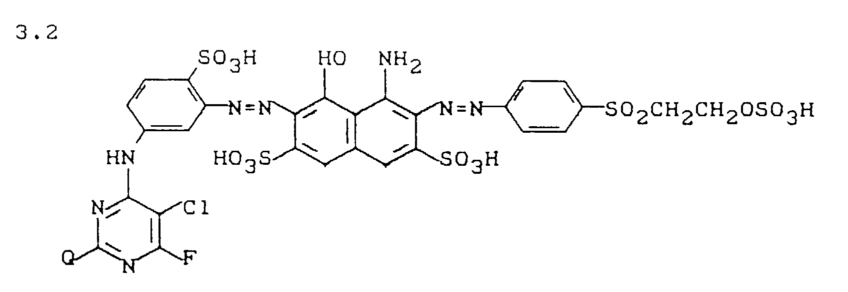 enthalten ist, worin bedeuten
- A¹ =: 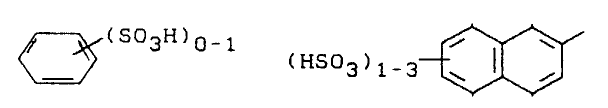
- A² =: 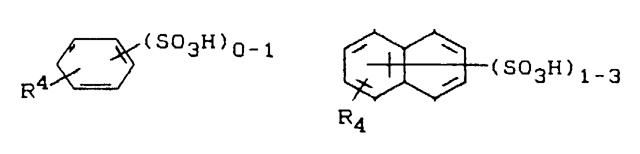
- R¹ =: H, CH₃, -CH₂-CH₃, -(CH₂)₂CH₃
- R² =: Cl, 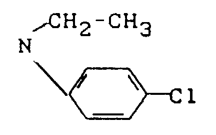
- R³ =: 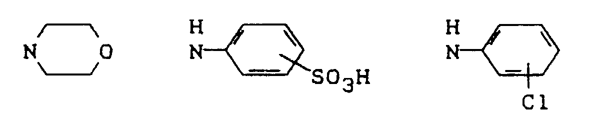
- R⁴ =: 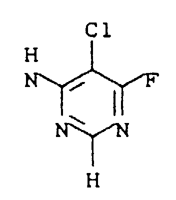 oder H
- Q =: H, F.

In einer besonders bevorzugten Ausführungsform ist weiterhin der Farbstoff 4.1 folgender Formel enthalten

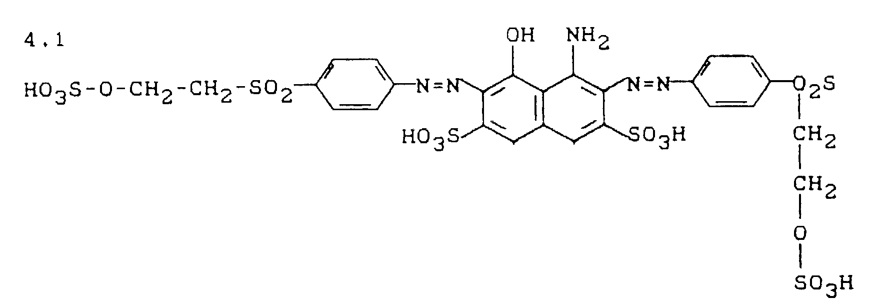

Besonders bevorzugte Mischungen werden im folgenden angegeben:
- Mischung 1:: Farbstoffe 1.2 und 3.1
- Mischung 2:: Farbstoffe 1.2 und 2.1
- Mischung 3:: Farbstoffe 1.3 und 2.2
- Mischung 4:: Farbstoffe 1.4, 3.2 und 4.1
- Mischung 5:: Farbstoffe 1.5 und 2.2

In einer bevorzugte Ausführungsform enthalten die Mischungen, bezogen auf den gesamten Farbstoffgehalt:
- Farbstoff 1:: 40 bis 60, insbesondere 40 bis 55 Gew.-%
- Farbstoff 2:: 0 bis 60, insbesondere 50 bis 60 Gew.-X
- Farbstoff 3:: 0 bis 60, insbesondere 32 bis 50 Gew.-X
- Farbstoff 4:: 0 bis 60, insbesondere 0 bis 13 Gew.-X

Die erfindungsgemäßen Mischungen eignen sich insbesondere für das Färben im Ausziehverfahren vorzugsweise nach folgendem Schema:

| Zeit(Min) | Temp.(°C) | Maßnahme |
|---|---|---|
| 0 | 30 | Farbstoffzusatz |
| 10 | 30 | Elektrolytzusatz (50g/l Kochsalz) |
| 20 | 30 | Alkalizusatz (20g/l Soda) |
| 30 | 30 | Aufheizen mit 1°/Minute |
| 60 | 60 | Färben |
| 120 | 60 | Ablassen und Auffüllen |
| 130 | 50 | Warm Spülen |
| 140 | 50 | Ablassen und Auffüllen |
| 150 | 50 | Warm Spülen |
| 160 | 50 | Ablassen und Auffüllen |
| 170 | 80 | Heiß Spülen |
| 180 | 80 | Ablassen und Auffüllen |
| 190 | 80 | Heiß Spülen |
| 200 | 80 | Ablassen und Auffüllen |
| 215 | 95 | Heiß Spülen |
| 220 | 95 | Heiß Ablassen im Überlauf |
| 225 | 80 | Warm Spülen im Überlauf |
| 230 | 20 | Kalt Spülen |
| 240 | 20 | Färbegut entnehmen. |

Zusätzlich können weitere Farbstoffe oder übliche Hilfsmittel eingesetzt werden. Insbesondere enthalten die erfindungsgemäßen Farbstoffmischungen pro 100 Teile Farbstoff 1 bis 50 Teile eines anorganischen Salzes wie beispielsweise Kochsalz oder Natriumsulfat. Die erfindungsgemäßen Mischungen enthalten weiterhin vorzugsweise einen Puffer, insbesondere einen anorganischen Puffer, der einen Pufferungsbereich zwischen pH von 6,5 bis 7,5 ergibt. Zur besseren Handhabung enthalten die erfindungsgemäßen Mischungen vorzugsweise Dispergiermittel, insbesondere 0,5 bis 10 Gew.-Teile eines organischen, anionischen Dispergiermittels, bezogen auf die gesamte Mischung und ein Entstaubungsmittel, vorzugsweise 0,5 bis 5 Gew.-Teile, bezogen auf die gesamte Mischung.

Soweit nichts anderes angegeben, sind die im folgenden angegebenen Teile Gewichtsteile.

### Beispiel 1

1000 Teile einer wäßrigen Färbeflotte werden bei 30°C mit 100 Teilen Baumwollwirkware und 2 Teilen Reaktivfarbstoffmischung versetzt. Die Mischung besteht aus je 1 Teil eines Farbstoffs 3.1 und eines Farbstoffs 1.1, 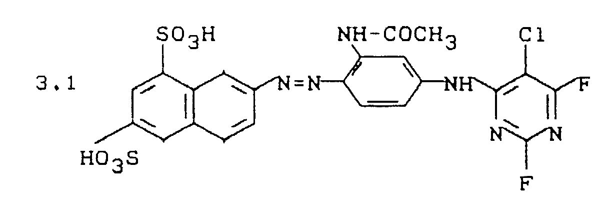 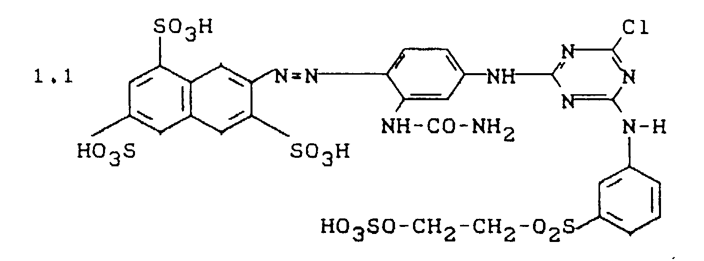 Nachdem sich die Farbstoffmischung gleichmäßig in der Flotte und auf der Baumwolle verteilt hat, werden 50 Teile Natriumchlorid in die Färbeflotte gegeben und anschließend 20 Teile Natriumcarbonat hinzugefügt. Diese Färbeflotte wird bei lebhafter Flotten- und Warenbewegung innerhalb 30 Minuten auf 60°C erwärmt und bei dieser Temperatur 60 Minuten belassen.

Danach wird die Flotte abgelassen, zweimal bei 50°C und zweimal bei 80°C gespült. Anschließend wird 15 Minuten kochend geseift und kalt gespült. Man erhält eine egale Gelbfärbung mit guten Echtheitseigenschaften.

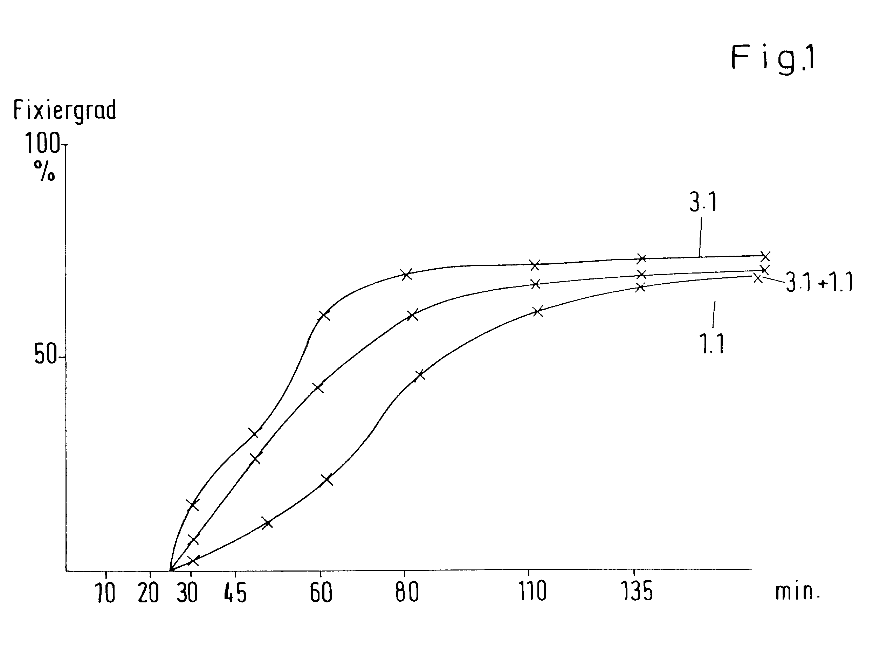

Werden die Einzelfarbstoffe der Farbstoffmischungen nach diesem Färbeschema gefärbt, so ergeben sich die in Fig. 1 dargestellten Fixierkurven. Hierbei ist aufgetragen der Fixiergrad (in %) gegen die Färbezeit. Unter dem Fixiergrad wird die Fixierausbeute in % vom Farbstoffangebot verstanden.

Der reaktivere Farbstoff 3.1 beginnt nach Zugabe des Fixiermittels bei 30°C sofort mit der Cellulosefaser zu reagieren.

Wenn sich die Hauptreaktion verlangsamt, beginnt die Aufheizphase auf die Endtemperatur von 60°C, während der eine erneute Reaktionsbeschleunigung beobachtet wird.

Kurze Zeit nachdem 60°C erreicht sind, geht die Fixierkurve in den waagerechten Teil über; die Färbung ist beendet.

Der weniger reaktive Farbstoff 1.1 reagiert bei den gewählten Startbedingungen zunächst langsam mit der Faser. Während der Aufheizphase tritt jedoch eine deutliche Steigerung der Reaktionsgeschwindigkeit ein.

Wird die Färbung mit einer Mischung der Farbstoffe 1.1 und 3.1 durchgeführt, dann zeigen die Einzelkomponenten in der Mischung ein gegenüber dem Typfarbstoff harmonischeres Ausziehverhalten, welches sich in einer gegenüber der Fixierkurve von 3.1 flacheren und gegenüber der Fixierkurve 1.1 steileren Fixierkurve äußert, d.h. der reaktionsträgere Farbstoff 1.1 fixiert in der Mischung bei gleichen Fixierbedingungen schneller als seinem Fixierverhalten als Typ entspricht.

Unerwartet und überraschend ist die Tatsache, daß die miteinander gemischten Farbstoffe eine gemeinsame Fixierkurve durchlaufen, die ein Maß für die positive gegenseitige Beeinflussung der Farbstoffe ist.

Weiterhin ist es überraschend, daß die reaktivere Mischungskomponente trotz der scheinbar zu scharf gewählten Fixierbedingungen des Materials gleichmäßig und mit hoher Ausbeute anfärbt. Die weniger reaktive Mischungskomponente erreicht andererseits trotz der scheinbar zu "milden" Reaktionsbedingungen gute Endausbeuten.

### Beispiel 2

- 100 Teile: einer Baumwollwirkware werden bei 30°C mit
- 1000 Teilen: einer wäßrigen Färbeflotte behandelt, welche
- 4 Teile: einer eingestellten Scharlachmischung enthält bestehend aus
50 Teilen Farbstoff 2.1
25 Teilen Farbstoff 1.2
25 Teilen Farbstoff 1.1 (siehe Beispiel 1)
1/2 Teile Natriumcarbonat
50 Teile Natriumchlorid und
20 Teile Soda (wasserfrei)

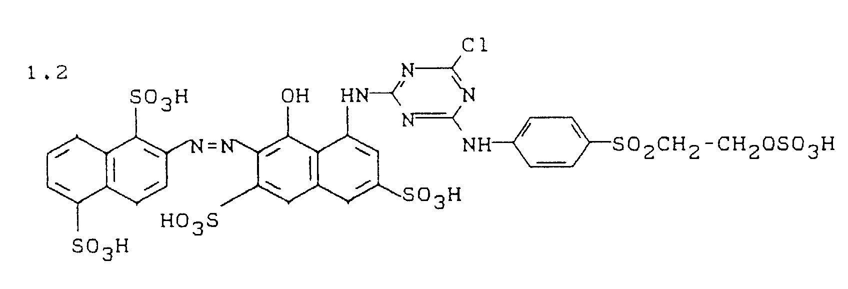

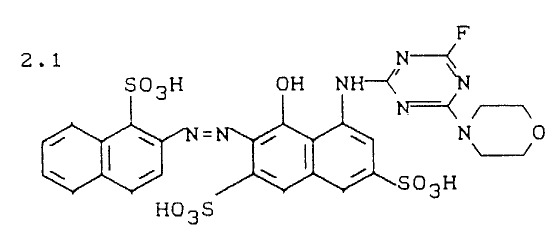

Nach gleichmäßiger Verteilung des Farbstoffs auf dem Fasermaterial über 45 Minuten bei 30°C wird die Flotte in 30 Minuten bei lebhafter Warenbewegung und guter Flottenzirkulation auf 60°C erwärmt und 30 Minuten bei dieser Temperatur behandelt. Danach wird die Flotte abgelassen, zweimal bei 50°C und zweimal bei 80°C gespült. Daraufhin wird mit frischer Flotte aufgefüllt und auf 98°C erwärmt. Nach 10 Minuten wird abgelassen und nach Auffüllen und erneut 10 Minuten bei 98°C behandelt. Daraufhin wird abgelassen und kalt gespült. Man erhält eine brillante Scharlachfärbung mit guten Echtheitseigenschaften.

### Beispiel 3

100 Teile einer Baumwollwirkware werden auf einem Kurzflottenjet bei 30°C mit 400 Teilen einer wäßrigen Flotte behandelt, welche
- 1,5 Teile: einer Scharlachmischung, Farbstoffe gemäß Beispiel 2 und
- 1 Teil: der Farbstoffmischung bestehend aus
- 50 Teilen: eines Farbstoff 1.3 und
- 50 Teilen: eines Farbstoff 2.2 sowie
- 1 Teil: der Farbstoffmischung bestehend aus
- 60 Teilen: eines Farbstoffs 1.1 (siehe Beispiel 1) und
- 40 Teilen: eines Farbstoffs 3.1 (siehe Beispiel 1) und außerdem
- 0,5 Teile: Natriumcarbonat
- 15 Teile: Soda (wasserfrei) und
- 30 Teile: Natriumchlorid
gelöst enthält.

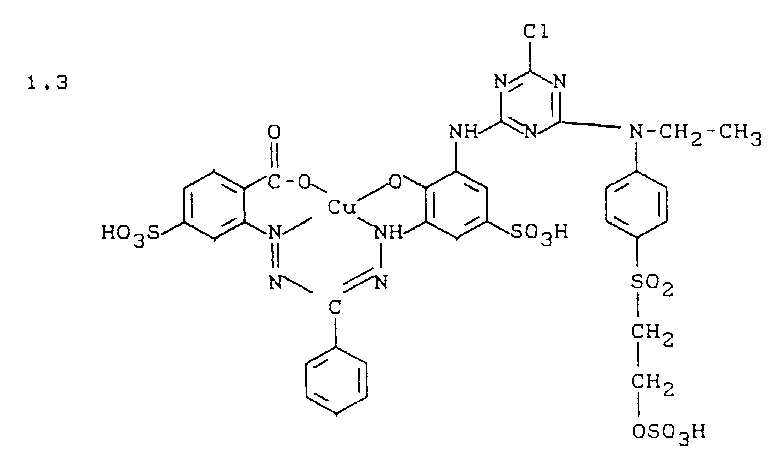

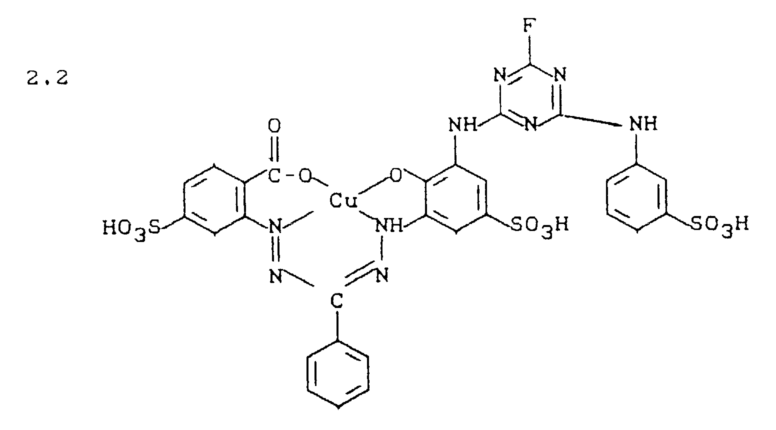

Nach 30 Minuten Behandlung bei dieser Temperatur wird während 30 Minuten auf 60°C erwärmt und weitere 30 Minuten bei dieser Temperatur unter lebhafter Flottenzirkulation und Warenbewegung gefärbt.

Daraufhin wird die Flotte abgelassen, zweimal bei 50°C und zweimal bei 80°C gespült und zweimals jeweils 10 Minuten bei Kochtemperatur behandelt. Anschließend wird kalt gespült.

Man erhält eine Braunfärbung mit guten Echtheitseigenschaften.

### Beispiel 4

1000 Teile einer wäßrigen Färbeflotte werden bei 30°C mit 100 Teilen Baumwollwirkware und 2 Teilen Reaktivfarbstoffmischung versetzt. Die Mischung besteht aus je 1 Teil der Farbstoffe 2.2 und 1.3 (siehe Beispiel 3).

Nachdem sich die Farbstoffmischung gleichmäßig in der Flotte und auf der Baumwolle verteilt hat, werden 50 Teile Natriumchlorid in die Färbeflotte gegeben und anschließend 20 Teile Natriumcarbonat hinzugefügt. Diese Färbeflotte wird bei lebhafter Flotten- und Warenbewegung innerhalb 30 Minuten auf 60°C erwärmt und bei dieser Temperatur 60 Minuten belassen.

Danach wird die Flotte abgelassen, zweimal bei 50°C und zweimal bei 80°C gespült. Anschließend wird 15 Minuten kochend geseift und kalt gespült. Man erhält eine egale Blaufärbung mit guten Echtheitseigenschaften.

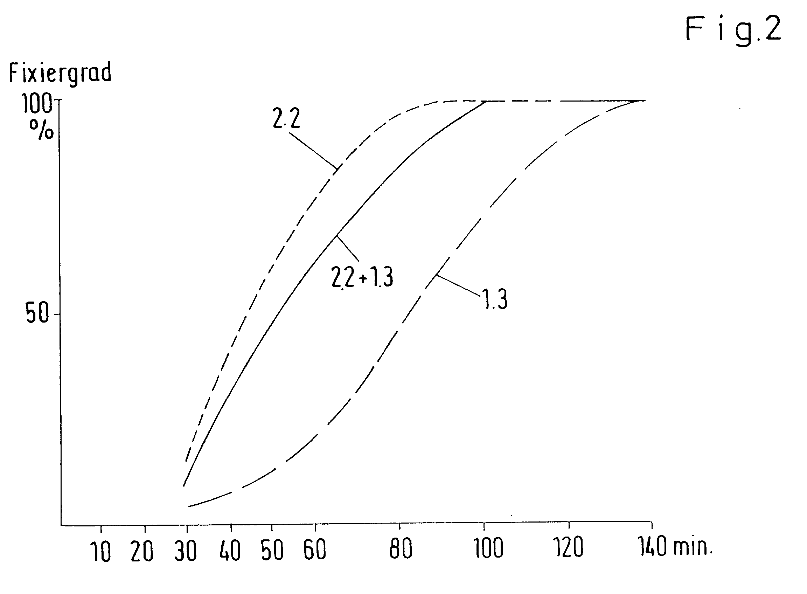

Werden die Einzelfarbstoffe der Farbstoffmischung gefärbt, so ergeben sich die in Fig. 2 dargestellten Fixierkurven.

Der reaktivere Farbstoff 2.2 beginnt nach Zugabe des Fixiermittels bei 30°C sofort mit der Cellulosefaser zu reagieren. Wenn sich die Hauptreaktion verlangsamt, beginnt die Aufheizphase auf die Endtemperatur von 60°C, während der eine erneute Reaktionsbeschleunigung beobachtet wird.

Kurze Zeit nachdem 60°C erreicht wird, geht die Fixierkurve nach dem waagerechten Teil über; die Färbung ist beendet.

Der weniger reaktive Farbstoff 1.3 reagiert bei den gewählten Startbedingungen zunächst langsam mit der Faser.

Während der Aufheizphase tritt jedoch eine deutliche Steigerung der Reaktionsgeschwindigkeit ein.

Wird die Färbung mit einer Mischung der Farbstoffe 2.2 und 1.3 durchgeführt, dann zeigen die Einzelkomponenten in der Mischung ein gegenüber dem Typfarbstoff harmonischeres Aufziehverhalten, welches sich in einer gegenüber der Fixierkurve von 2.2 flacheren und gegenüber der Fixierkurve 1.3 steileren Fixierkurve äußert. Das heißt, der reaktionsträgere Farbstoff 1.3 fixiert in der Mischung bei gleichen Fixierbedingungen schneller als seinem Fixierverhalten als Typ entspricht.

### Beispiel 5

100 Teile einer Baumwollwirkware werden auf einem Jetfärbeaggregat bei 30°C mit 1000 Teilen einer wäßrigen Flotte behandelt, welche
- 5 Teile: der Reaktivfarbstoffmarineblaumischung bestehend aus
32 Teilen eines Farbstoffs 3.2
55 Teilen eines Farbstoffs 1.4
13 Teilen des Farbstoffs 4.1
- 0,5 Teile: Natriumcarbonat
- 20 Teile: Soda (wasserfrei)
- 60 Teile: Natriumchlorid
gelöst enthält.

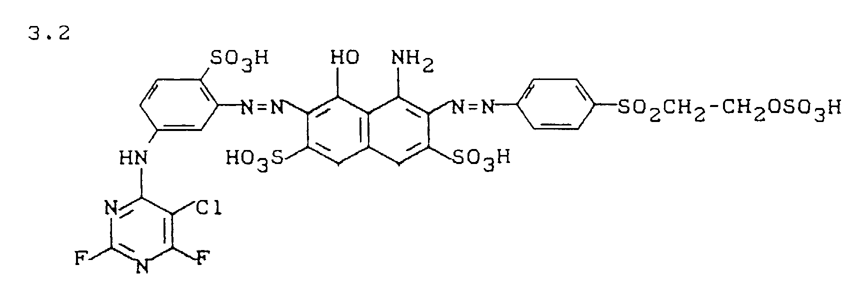

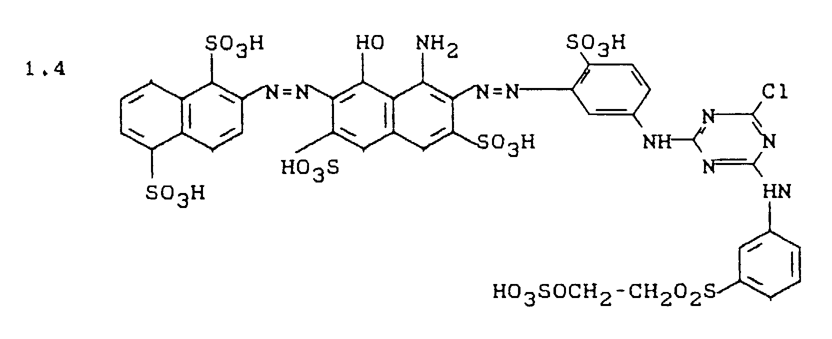

Nach gleichmäßiger Verteilung des aufgezogenen Farbstoffs auf dem Cellulosefasermaterial wird über 30 Minuten gleichmäßig auf 60°C erwärmt und weitere 60 Minuten bei dieser Temperatur unter lebhafter Flottenzirkulation und Warenbewegung gefärbt.

Danach wird abgelassen, zweimal kalt und warm gespült und zweimal je 15 Minuten kochend behandelt.

Man erhält eine egale Marineblaufärbung mit guten Echtheitseigenschaften.

### Beispiel 6

1000 Teile einer wäßrigen Färbeflotte werden bei 30°C mit 100 Teilen Baumwollwirkware und einer Kombination von drei Reaktivfarbstoffmischungen versetzt:
- Mischung 1 bestehend aus: 40 Teilen Farbstoff der Formel 1.1 und
60 Teilen Farbstoff der Formel 3.1
- Mischung 2 bestehend aus: 50 Teilen Farbstoff der Formel 1.2 und
50 Teilen Farbstoff der Formel 2.1
- Mischung 3 bestehend aus: 50 Teilen Farbstoff der Formel 1.3 und
50 Teilen Farbstoff der Formel 2.2
wobei die Farbstoffe jeweils die in den vorangegangenen Beispielen angegebenen Formeln hatten.

Bezogen auf 1000 Teile der Färbeflotte werden dabei eingesetzt:
- Mischung 1:: 0,55 Teile
- Mischung 2:: 0,66 Teile
- Mischung 3:: 0,66 Teile

Die Flotte enthält außerdem 0,5 Teile Natriumbicarbonat, 20 Teile Soda wasserfrei und 50 Teile Natriumsulfat.

Nach 10 Minuten wird die Färbeflotte dann unter lebhafter Flotten- und Warenbewegung innerhalb von 30 Minuten auf 60°C erwärmt und bei dieser Temperatur 30 Minuten belassen.

Danach wird die Flotte abgelassen, zweimal bei 50°C und zweimal bei 80°C gespült. Anschließend wird 15 Minuten kochend geseift und kalt gespült. Man erhält eine egale Braunfärbung mit guten Echtheitseigenschaften.

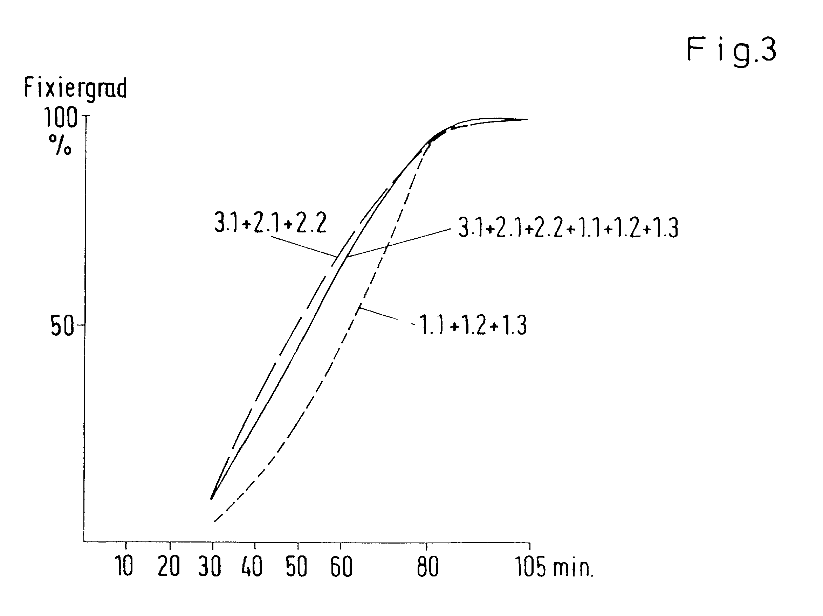

Werden die Einzelmischungen 1, 2 und 3 verwendet, so ergeben sich die in Fig. 3 dargestellten Fixierkurven. Kurze Zeit nachdem 60°C erreicht sind, geht die Fixierkurve in den waagerechten Teil über; die Färbung ist beendet.

Wird die Färbung mit einer Kombination der Farbstoffe 3.1, 2.1 und 2.2 oder einer Kombination der Farbstoffe 1.1, 1.2 und 1.3 durchgeführt, dann zeigen die Einzelkomponenten in diesen Kombinationen ein gegenüber der Kombination aus Mischung 1, 2, 3 weniger harmonisches Aufziehverhalten, welches sich in der Fixierkurve von 3.1, 2.1 und 2.2 in einer gegenüber der Fixierkurve von 1, 2, 3 und gegenüber der Fixierkurve 1.1, 1.2 und 1.3 steileren Fixierkurve äußert. Das heißt, der reaktionsträgere Farbstoff fixiert in der beanspruchten Mischung bei gleichen Fixierbedingungen schneller als seinen Fixierverhalten als Typ entspricht.

## Patentansprüche

1. Farbstoffmischung aus wenigstens zwei Reaktivfarbstoffen> dadurch gekennzeichnet, daß wenigstens ein Vinylsulfonyltriazinfarbstoff L der Formel 1.1 bis 1.5 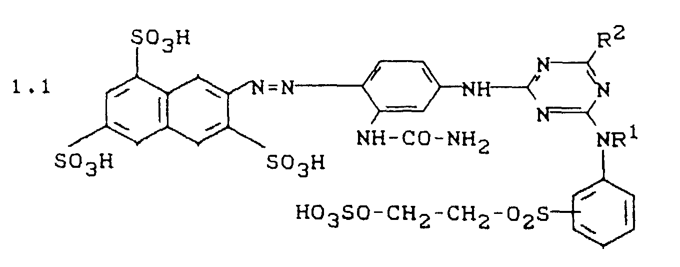 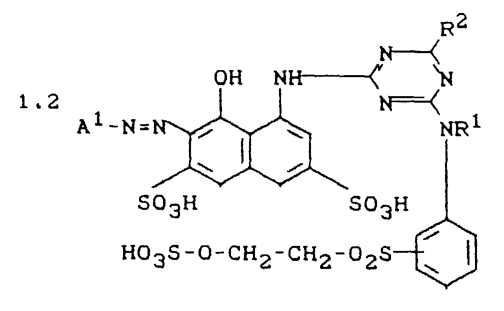 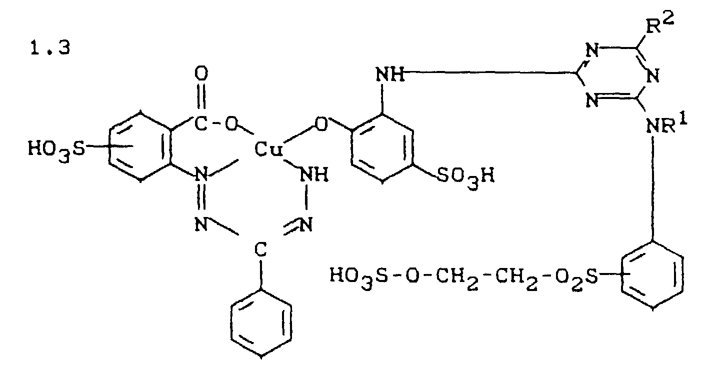 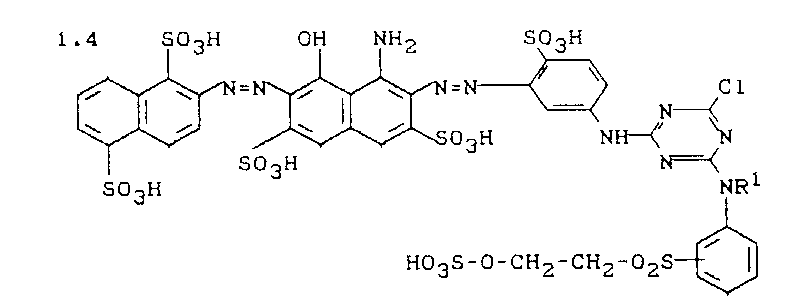 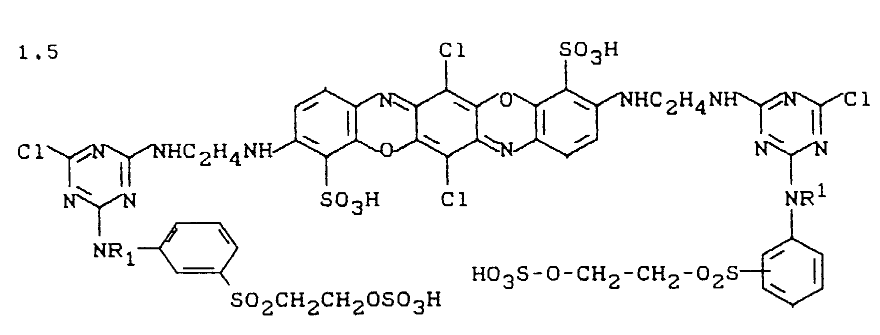 und wenigstens ein Monofluortriazinfarbstoff 2 oder Fluorchlorpyrimidinfarbstoff 3 der Formeln 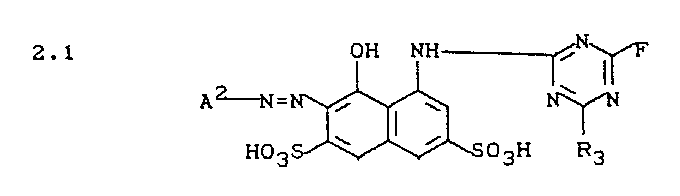 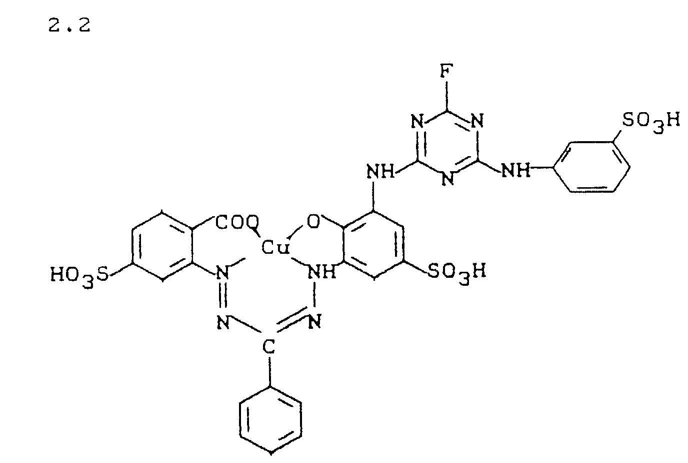 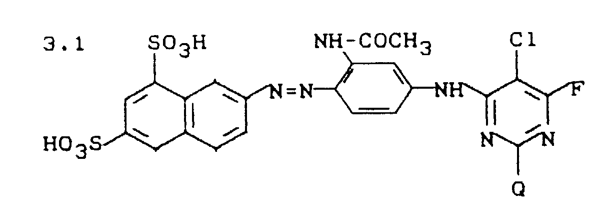 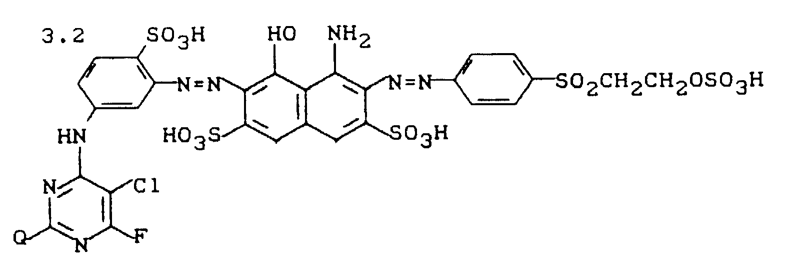 enthalten ist, worin bedeuten
A¹ = 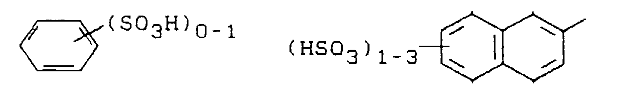
A² = 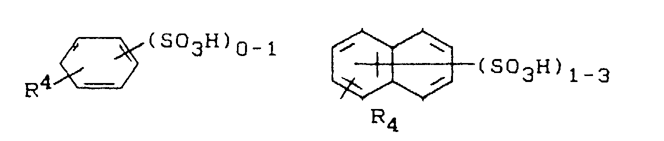
R¹ = H, CH₃, -CH₂-CH₃, -(CH₂)₂CH₃
R² = Cl, 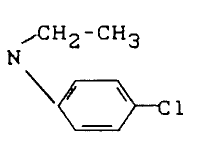
R³ = 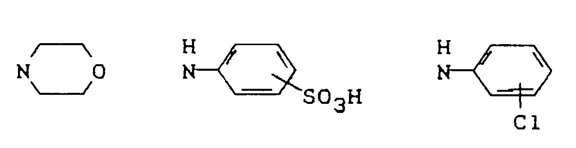
R⁴ = 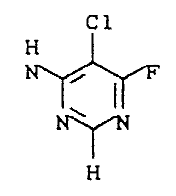 oder H
Q = H, F.

2. Mischung nach Anspruch 1, dadurch gekennzeichnet, daß zusätzlich der Farbstoff 4.1 folgender Formel enthalten ist

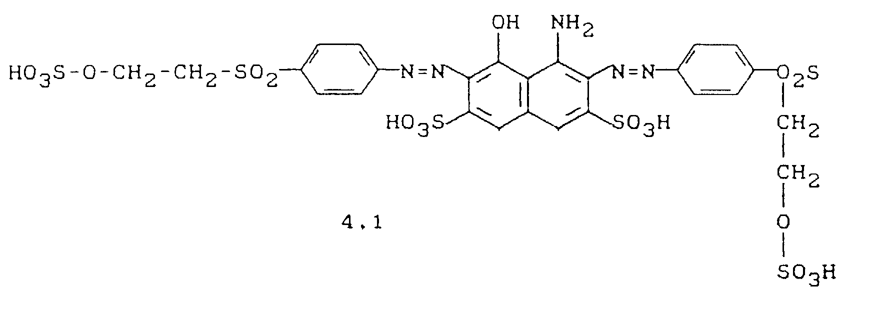

3. Mischungen nach wenigstens einem der vorhergehenden Ansprüche, dadurch gekennzeichnet, daß enthalten sind, bezogen auf die Summe der Farbstoffe
Farbstoff 1 : 1 Gew.-% 40 - 60
Farbstoff 2 : Gew.-% 0 - 60
Farbstoff 3 : Gew.-% 0 - 60
Farbstoff 4.1 : Gew.-% 0 - 60

4. Mischungen nach wenigstens einem der vorhergehenden Ansprüche, dadurch gekennzeichnet, daß die Farbstoffmischung auf 100 Teile 1 bis 50 Teile eines anorganischen Salzes enthält.

5. Mischung nach wenigstens einem der vorhergehenden Ansprüche, dadurch gekennzeichnet, daß pro 100 Teile des Farbstoffs 1 bis 5 Teile eines anorganischen Puffers, 0,5 bis 10 Teile eine Dispergiermittels und 0,5 bis 5 Teile eines Entstaubungsmittels enthalten sind und die Mischung einen pH-Wert von 6,5 bis 7,5 aufweist.

6. Verfahren zum Farben von Cellulosefasern oder Cellulose enthaltenden Fasermischungen, dadurch gekennzeichnet, daß eine Reaktivfarbstoffmischung gemäß wenigstens einem der vorhergehenden Ansprüche verwendet wird.

## Claims

1. Dyestuff mixture of at least two reactive dyestuffs, characterised in that at least one vinylsulphonyltriazine dyestuff 1 of the formula 1.1 to 1.5 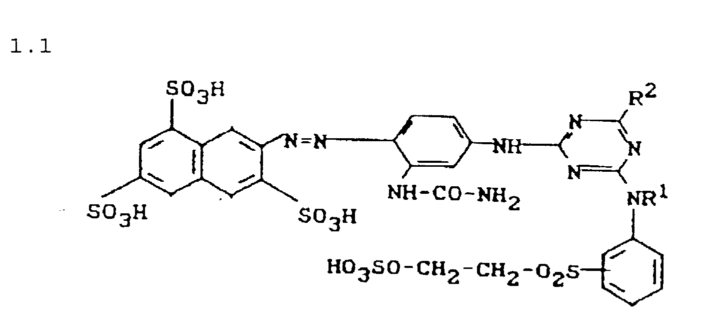 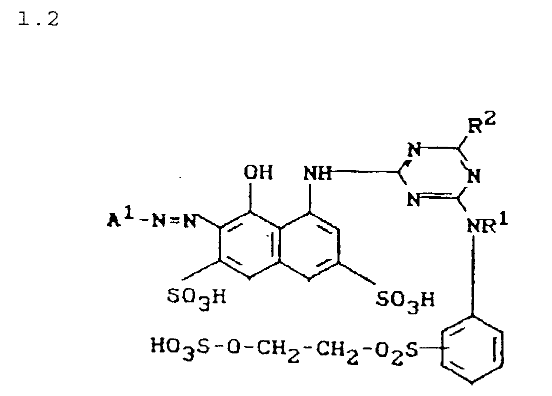 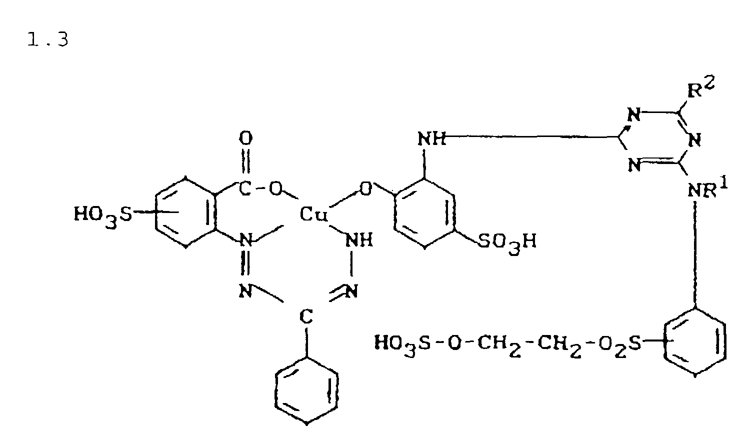 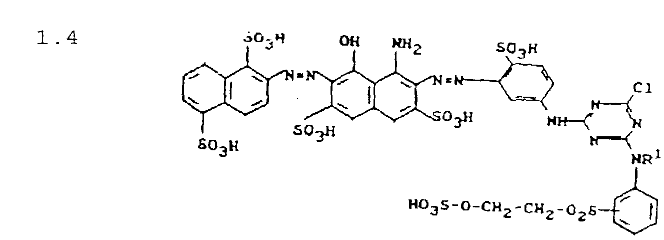 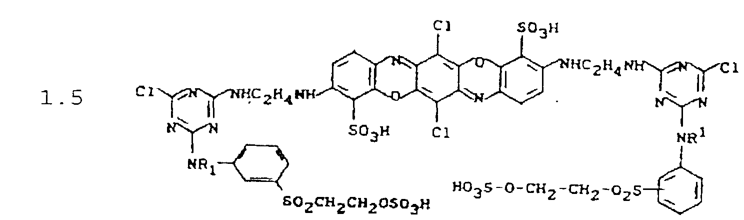 and at least one monofluorotriazine dyestuff 2 or fluorochloropyrimidine dyestuff 3 of the formulae 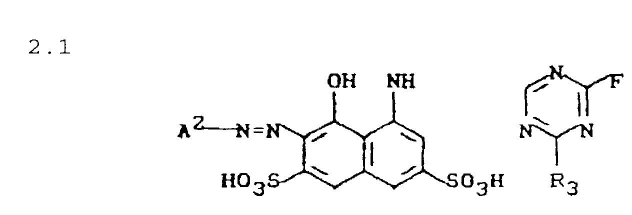 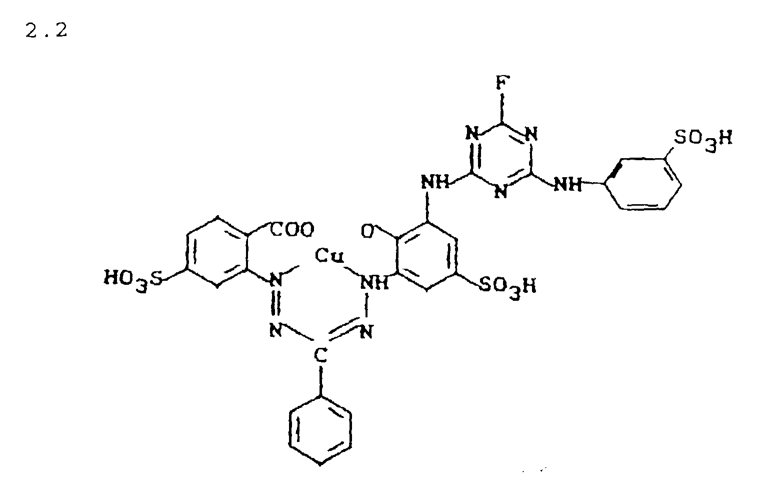 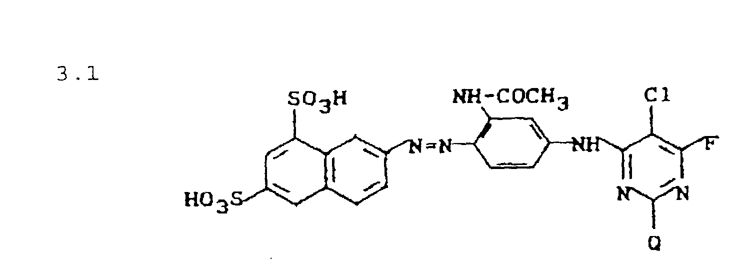 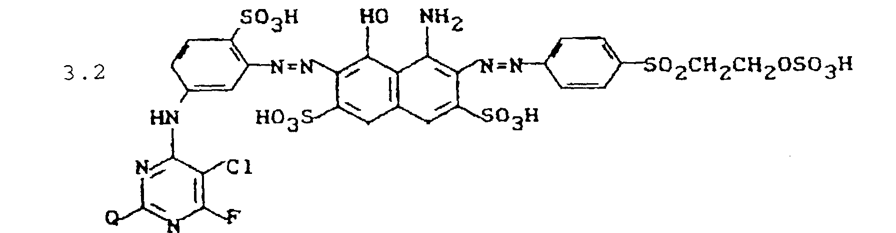 are contained therein, in which
A¹ denotes 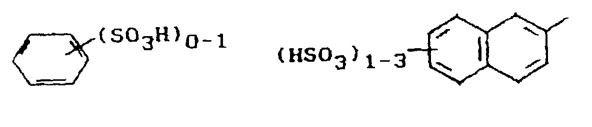
A² denotes 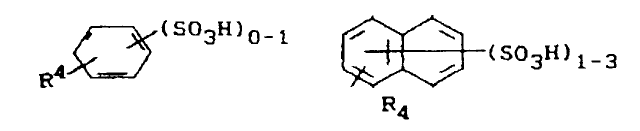
R¹ denotes H, CH₃ , -CH₂-CH₃, -(CH₂)₂CH₃
R² denotes Cl, 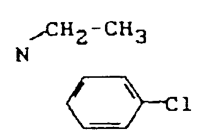
R³ denotes 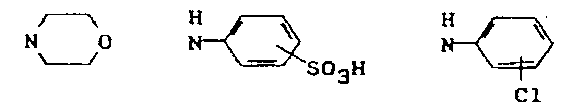
R⁴ denotes 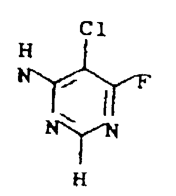 or H
Q denotes H, F.

2. Mixture according to Claim 1, characterised in that in addition the dyestuff 4.1 of the formula below is contained therein

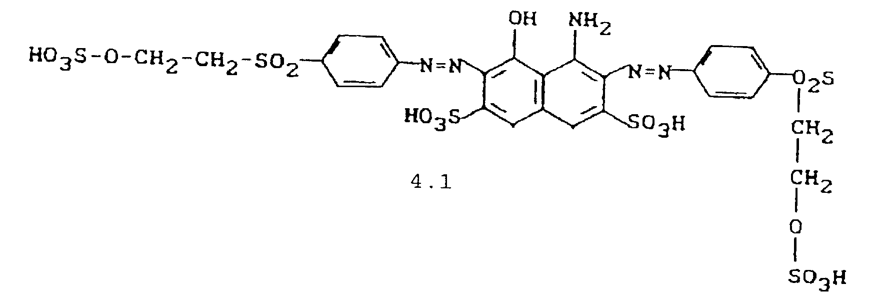

3. Mixtures according to at least one of the preceding claims, characterised in that the following amounts of dyestuffs, relative to the sum of dyestuffs, are contained therein:
Dyestuff 1 : 40-60% by weight
Dyestuff 2 : 0-60% by weight
Dyestuff 3 : 0-60% by weight
Dyestuff 4.1: 0-60% by weight

4. Mixtures according to at least one of the preceding claims, characterised in that the dyestuff mixture contains, per 100 parts, 1 to 50 parts of an inorganic salt.

5. Mixture according to at least one of the preceding claims, characterised in that per 100 parts of dyestuff, 1 to 5 parts of an inorganic buffer, 0.5 to 10 parts of a dispersant and 0.5 to 5 parts of a dustproofing agent are contained therein and the mixture has a pH of 6.5 to 7.5.

6. Process for the dyeing of cellulose fibres or cellulose-containing fibre blends, characterised in that a reactive dyestuff mixture according to at least one of the preceding claims is used.

## Revendications

1. Mélange de colorants consistant en au moins deux colorants réactifs et caractérisé en cc qu'il contient au moins un colorant de vinylsulfonyltriazine 1 de formule 1.1 à 1.5 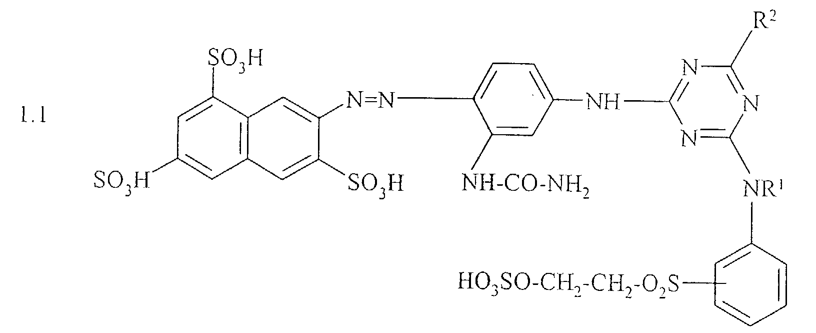 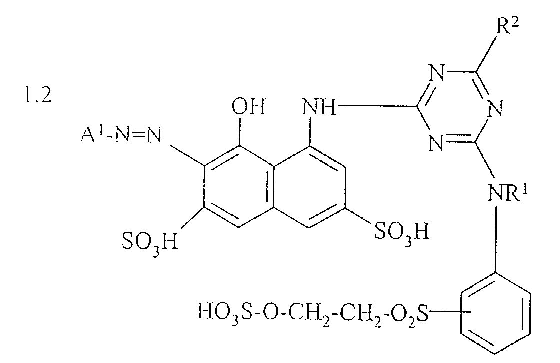 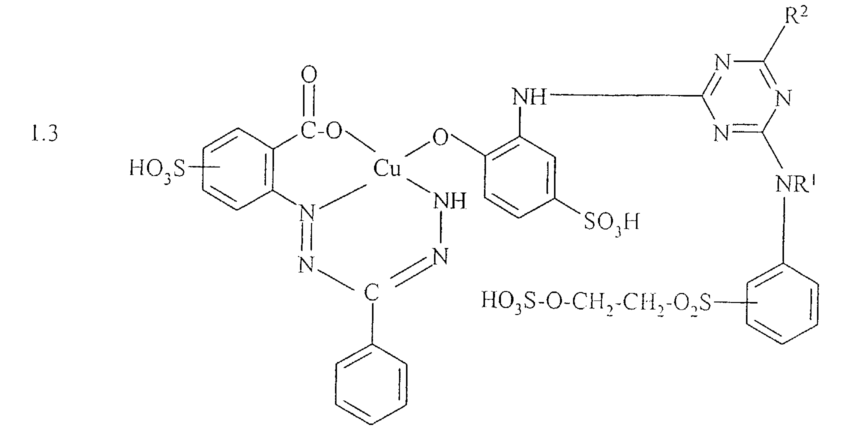 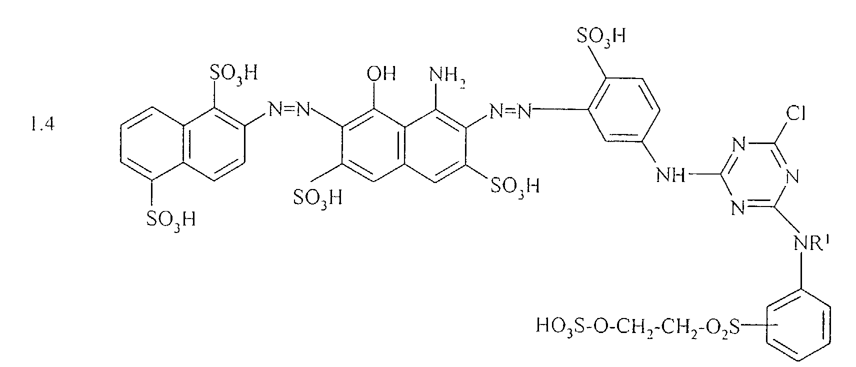 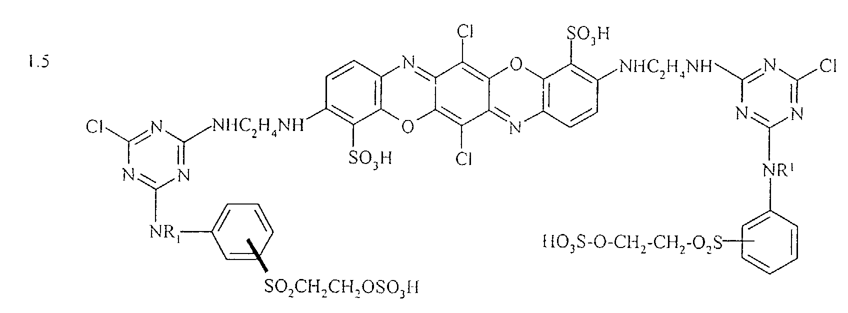 et au moins un colorant de monofluorotriazine 2 ou un colorant de fluorochloropyrimidine 3 de formule 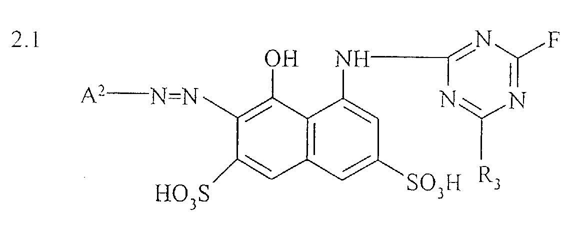 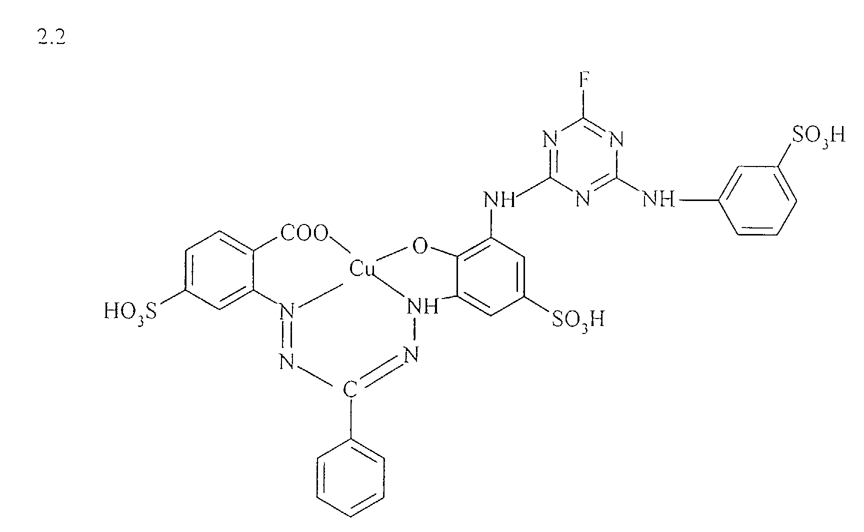 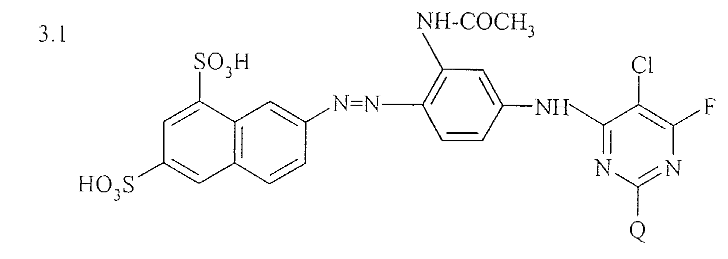 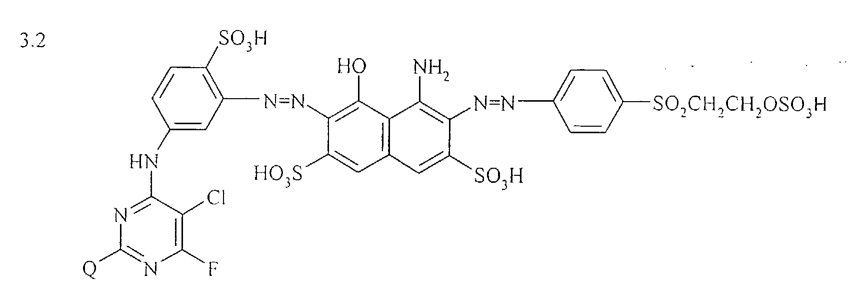 les symboles de ces formules ayant les significations suivantes :
A¹ = 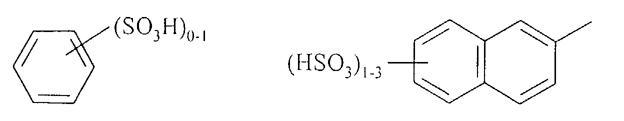
A² = 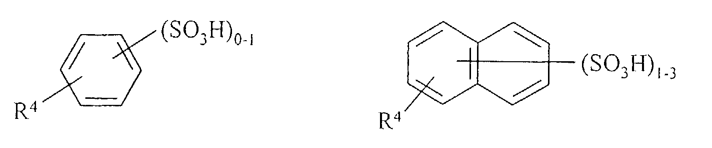
R¹ = H, CH₃, -CH₂-CH₃, -(CH₂)₂CH₃
R² = 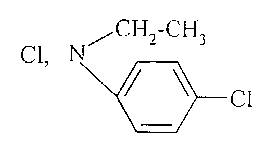
R³ = 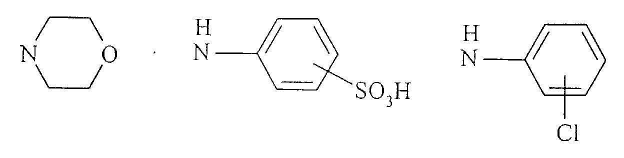
R⁴ = 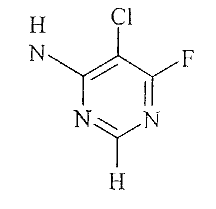 ou H
Q = H, F.

2. Mélange selon la revendication 1, caractérisé en ce qu'il contient en outre le colorant 4.1 de formule

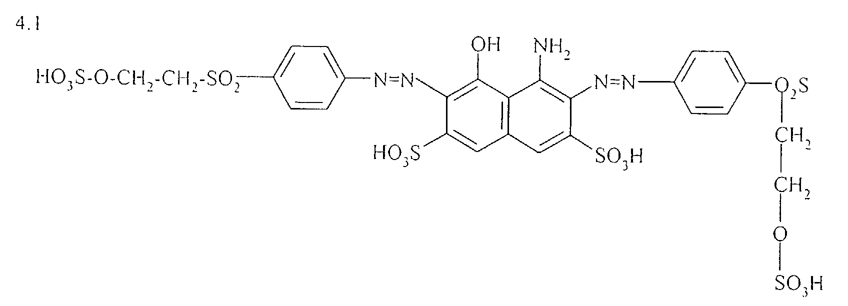

3. Mélanges selon au moins une des revendications qui précède, caractérisé en ce qu'ils contiennent, sur les colorants totaux, les composants suivants :
Colorant 1 : 40 à 60 % en poids
Colorant 2 : 0 à 60 % en poids
Colorant 3 : 0 à 60 % en poids
Colorant 4.1 : 0 à 60 % en poids

4. Mélanges selon au moins une des revendications qui précèdent caractérisés en ce que le mélange de colorants contient, pour 100 parties, 1 à 50 parties d'un sel minéral.

5. Mélange selon au moins une des revendications qui précèdent caractérisé en ce qu'il contient, pour 100 parties des colorants, 1 à 5 parties d'un tampon minéral, 0,5 10 parties d'un agent dispersant et 0,5 à parties d'un agent anti-poussière, et en ce qu'il présente un pH de 6,5 à 7,5.

6. Procédé pour teindre les fibres cellulosiques ou les mélanges de fibres contenant de la cellulose, caractérisé en ce que l'on utilise un mélange de colorants réactifs selon au moins une des revendications qui précèdent.
